Europäisches Patentamt

European Patent Office

Office européen des brevets

(11) Veröffentlichungsnummer: **0 121 606**
**B1**

## EUROPÄISCHE PATENTSCHRIFT

(45) Veröffentlichungstag der Patentschrift:
**22.04.87**

(21) Anmeldenummer: **83113133.9**

(22) Anmeldetag: **27.12.83**

(51) Int. Cl.⁴: **C 08 G 69/16, C 08 L 77/00,
C 08 L 77/02, C 08 L 67/06,
C 08 F 279/02**

(54) Verfahren zur Herstellung von schlagzähen Polyamid-Formmassen durch alkalische Lactampolymerisation.

(30) Priorität: **07.01.83 DE 3300363**

(43) Veröffentlichungstag der Anmeldung:
**17.10.84 Patentblatt 84/42**

(45) Bekanntmachung des Hinweises auf die Patenterteilung:
**22.04.87 Patentblatt 87/17**

(84) Benannte Vertragsstaaten:
**BE DE FR GB IT NL**

(56) Entgegenhaltungen:
**DE - A - 2 426 671
FR - A - 1 586 822
GB - A - 1 015 236
US - A - 4 020 036**

(73) Patentinhaber: **BASF Aktiengesellschaft,
Carl-Bosch-Strasse 38, D-6700 Ludwigshafen (DE)**

(72) Erfinder: **Horn, Peter, Dr., Neue Stuecker 15,
D-6900 Heidelberg (DE)**
Erfinder: **Buensch, Hellmut, Dr., Panoramastrasse 81,
D-6906 Leimen (DE)**
Erfinder: **Gehm, Robert, Dr., Mannheimer Strasse 45,
D-6703 Limburgerhof (DE)**
Erfinder: **Marx, Matthias, Dr., Seebacher Strasse 49,
D-6702 Bad Duerkheim (DE)**

## Beschreibung

Gegenstand der Erfindung ist ein Verfahren zur Herstellung von Polyamid-Formmassen durch aktivierte anionische Lactampolymerisation. Diese ist an sich bekannt und beispielsweise im Kunststoff-Handbuch, Band VI, Polyamide, Carl Hanser Verlag 1966, Seiten 46 bis 49 beschrieben. Dabei geht man von zwei Komponenten I und II aus, wobei die Komponente I eine Katalysator enthaltende Lactam-Schmelze und die Komponente II eine Aktivator enthaltende Lactam-Schmelze ist. Die beiden Komponenten werden gemischt, in eine Form transportiert und dort auspolymerisiert. Dies kann auch nach dem aus der Polyurethan-Technologie bekannten Reaktionsspritzguss (RIM)-Verfahren geschehen.

Trotz der hervorragenden Eigenschaften des ALP-Polymerisats, d.h. eines durch aktivierte alkalische Lactampolymerisation hergetellten Polymerisats, sind für viele Einsatzzwecke die Schlagzähigkeit und die Reissdehnung unbefriedigend.

Es sind einige Versuche bekannt, diese Eigenschaften zu verbessern. So wird, z.B. in der DE-A 22 48 664, beschrieben, die Schlagzähigkeit durch Zumischen von hochmolekularen Polyalkylenglykolen zum Polymerisationsansatz zu verbessern. Nachteilig an diesem Verfahren ist das Ausschwitzen der Polyalkylenglykole am Fertigteil.

Die Verwendung von polymeren Aktivatoren, hergestellt aus Polyetherolen und einem Überschuss Diisocyanat (präpolymere Isocyanate), wird z.B. in Angewandte Makromolekulare Chemie 58/59 (1977) S. 321–343 beschrieben. Mit diesem Verfahren werden jedoch ungenügende Umsätze des Lactams zum Polymeren erzielt, insbesondere bei den sehr kurzen Polymerisationszeiten, die für das RIM-Verfahren einzuhalten sind.

Die DE-A 24 12 106 berichtet über Blockpolymerisate aus Polyether und Lactam, verknüpft über Esteramid-Brücken. Dieses Verfahren ist jedoch technisch sehr aufwendig, ferner muss unter Verfahrensbedingungen gearbeitet werden, die dem Verarbeiter peinlichsten Feuchtigkeitsausschluss zwingend vorschreiben.

Es ist bekannt, dass durch hydrolytische Polymerisation hergestellte Polyamide durch den Zusatz von Pfropfpolymerisation auf Basis von Ethylenpolymeren schlagzäh modifiziert werden können (s. z.B. EP- 2 761). Die dort beschriebenen Pfropfpolymeren sind jedoch zur Schlagzähmodifizierung von alkalisch polymerisiertem Polylactam nicht geeignet: die Pfropfcopolymeren sind entweder in monomerem Lactam unlöslich oder sie stören die Polymerisation.

Aufgabe der vorliegenden Erfindung war es, ein Verfahren zur Herstellung schlagzäher Polyamid-Formmassen, insbesondere für die RIM-Technologie, zu entwickeln, das die oben beschriebenen Nachteile überwindet.

Diese Aufgabe wird gelöst durch ein Verfahren zur Herstellung von schlagzähen Polyamid-Formmassen durch aktivierte alkalische Polymerisation von Lactamen, das dadurch gekennzeichnet ist, dass man die Polymerisation durchführt in Gegenwart eines Pfropfpolymerisats P, bei welchem auf

A. 5 bis 95 Gew.-Teile eines kautschukartigen Polymerisats mit einem Molekulargewicht von 500 bis 500 000 und einer Glastemperatur unter 0 °C

B. 95 bis 5 Gew.-Teile eines Polyaddukts, eines Polykondensats oder eines Acrylpolymerisats, welches eine Glastemperatur über 0 °C aufweist, sowie

C. 0 bis 90 Gew.-Tele Vinylmonomere gepfropft sind.

Man erhält danach Polyamid-Formmasen, die sich durch hohe Schlagzähigkeit, Kälteschlagzähigkeit und Reissdehnung auszeichnen und gleichzeitig die Nachteile der Verfahren gemäss dem oben dargestellten Stand der Technik nicht aufweisen.

Zu den Ausgangsstoffen für die Pfropfpolymerisate P ist im einzelnen folgendes auszuführen:

Als Polymerisate (A) kommen Naturkautschuk sowie handelsübliche synthetische Kautschuke in Frage, wie sie z.B. in «The Synthetic Rubber Manual», 8th Edition, 1980, des International Institute of Synthetic Rubber Producers Inc. aufgeführt sind. Als Verbindungsklassen seien genannt Polydien-, Polychloropren-, Polybutyl-, Polynitril-, Ethylen-α-Olefin-Dien- (EPDM-) Kautschuke sowie statistische Copolymerisate aus Dienen und copolymerisierbaren Vinylmonomeren wie SBR-Kautschuke, Polyacrylatkautschuke und Ethylen-Vinylestercopolymerisate. Bevorzugt sind Dienpolymere, wie Polydiene, Polydien-Blöcke enthaltende Blockpolymere, besonders mit aus Styrol- und/oder Acrylnitril- sowie aus Butadien und/oder Isopren aufgebauten Blöcken, weiterhin SBR- und EPDM-Kautschuke. Das Molekulargewicht geeigneter Kautschuke (A) kann in weiten Grenzen variiert werden, zu hohe Molekulargewichte führen jedoch zu entsprechend hohen Lösungsviskositäten bzw. niedrigen Konzentrationen bei der Verarbeitung. Bevorzugt werden Kautschuke mit Molekulargewichten von 500 bis 500 000, besonders bevorzugt solche, deren Molekulargewichte 2 000 bis 300 000 betragen. Als kautschukartige Polymere A können auch vernetzbare bzw. pfropfaktive, bei Raumtemperatur flüssige Polymere, z.B. Polybutadienöle, Polyisoprene oder Polydienblöcke enthaltende Blockcopolymerisate verwendet werden, deren Molekulargewichte 500 bis 5 000 betragen. In der Regel werden Kautschuke mit Glastemperaturen unter 0 °C verwendet, bevorzugt solche, deren Glastemperaturen unter −10 °C liegen. Dies gilt bei den Blockpolymerisaten für die jeweiligen Polydien-Blöcke. Bei der Verwendung mehrerer Kautschuke werden bevorzugt Gemische aus hoch- und niedermolekularen Polymeren A eingesetzt.

Eine weitere bevorzugte Ausführungsform des Verfahrens sieht die Verwendung von Kautschuken vor, die reaktive Gruppen mit aciden Wasserstoffatomen tragen, wie Hydroxyl-, primäre oder sekundäre Aminogruppen, Carboxylgruppen.

Der Anteil an Kautschuken (A) richtet sich nach dem gewünschten Elastifizierungsgrad und den notwendigen Anteilen an Einsatzstoffen (B) und ggf. (C). Bevorzugt verwendet man bis zu 80 Gew.-% (A), bezogen auf die Summe aus (A), (B) und ggf. (C), besonders bevorzugt 25 bis 75 Gew.-% (A), insbesondere 40 bis 75 Gew.-% (A).

Einsatzstoffe der Gruppe (B) sind Polyaddukte, Polykondensate oder Acrylpolymerisate. Sie sollen vorzugsweise in monomerem Lactam löslich und mit Polylactam verträglich sein und ein Molekulargewicht von 1 000 bis 50 000, bevorzugt 1 000 bis 40 000, insbesondere 2 000 bis 20 000 aufweisen. Zu niedrige Molekulargewichte der Polymeren (B) bringen in der Regel eine ungenügende Wirkung hinsichtlich der Verträglichkeit mit Polyamid, Molekulargewichte über 50 000 führen häufig zu sehr hohen Viskositäten bei der Verarbeitung.

Bevorzugt werden Polymere (B) bzw. (B'), die bezüglich der Vinylmonomeren (C) eine hinreichend hohe Pfropfaktivität zeigen, insbesondere solche, die einen mittleren Gehalt an olefinischen Doppelbindungen je Polymermolekül von 0,2 bis 2, bevorzugt 0,3 bis 1,5 aufweisen. Optimal ist die Verwendung von Polymeren, die eine olefinische Doppelbindung je Molekül tragen, dies ist in der Regel jedoch nicht notwendig. Liegt der Doppelbindungsgehalt zu hoch, so kann unerwünschte Vernetzung eintreten. Geeignete Polymere (B) können prinzipiell alle Polymeren sein, die den oben genannten Anforderungen genügen und sich in homogener oder heterogener Reaktion mit den Kautschuken (A) und ggf. den Monomeren (C) umsetzen lassen. Dabei ist es in der Regel erwünscht, nicht aber unbedingt erforderlich, dass die Polymeren (B) vollständig umgesetzt werden. Beispiele geeigneter Verbindungsklassen sind Polyaddukte und Polykondensate, wie Polyether, insbesondere Polyalkylenoxide, Polyester, Polyurethane, Polyetherurethane, Polyesterurethane, Polyamide, Polyetheramide und Polysulfone, sowie Acrylpolymerisate mit einer Glastemperatur über 0 °C, wie Poly(meth)acrylsäureester und deren Mischpolymerisate mit anderen Vinylmonomeren sowie Poly(meth)acrylnitril. Bevorzugte Polymere (B) bzw. (B'), die olefinische Doppelbindungen enthalten, können durch Umsetzung gesättigter Polymerer mit olefinisch ungesättigten Reagenzien erhalten werden. So können z.B. Polymere, die Hydroxyl-, primäre oder sekundäre Aminogruppen enthalten, mit olefinisch ungesättigten Carbonsäuren wie (Meth)acrylsäure, Maleinsäure, Fumarsäure oder Crotonsäure bzw. deren Derivaten wie Säurehalogeniden, -anhydriden, (Halb)Estern umgesetzt werden. Eine weitere Möglichkeit besteht darin, H-acide Gruppen enthaltende Polymere mit diesen H-aciden Gruppen reagierende Reste gebunden enthaltenden olefinisch ungesättigten Reagenzien umzusetzen. Beispielsweise lassen sich H-acide Gruppen enthaltende Polymere mit olefinisch ungesättigten Epoxiden wie Glycidylallylether oder -(meth) acrylat oder olefinisch ungesättigten Isocyanaten zur Reaktion bringen. Polymere mit Carboxylgruppen können auch mit zur Addition befähigten Dienen oder olefinisch ungesättigten Alkoholen zur Reaktion gebracht werden. Es ist jedoch auch möglich, olefinisch ungesättigte Reagenzien direkt bei der Herstellung der Polymeren mitzuverwenden, z.B. olefinisch ungesättigte Carbonsäuren bei der Herstellung von Polyestern oder Polyamiden, olefinisch ungesättigte Alkohole bei der Herstellung von Polyestern, Polyethern, Polyurethanen. Bei der ionischen Polymerisation von (Meth)acrylnitril oder (Meth)acrylsäureestern können olefinisch ungesättigte Reagenzien zum Kettenabbruch verwendet werden, wie Allylbromid, Glycidylallylether oder -(meth)acrylat. Ferner können bei der Polymerisation Kettenabbruchmittel oder Kettenübertragungsmittel verwendet werden, die reaktive Gruppen aufweisen, welche sich nachträglich mit olefinisch ungesättigten Reagenzien umsetzen lassen.

Der Anteil an Polymeren (B) in den Pfropfpolymerisaten P richtet sich im wesentlichen danach, wieviel notwendig ist, um jeweils eine ausreichende Verträglichkeit zu erzielen. Bevorzugt enthalten die Pfropfpolymerisate 10 bis 60 Gew.-% Polymere (B), besonders bevorzugt 15 bis 40 Gew.-% (B). Als Monomere (C) sind prinzipiell alle radikalisch polymerisierbaren Verbindungen, die mindestens eine Vinyl-Doppelbindung aufweisen, geeignet, wobei der Anteil an mehrfach olefinisch ungesättigten Monomeren zweckmässig in der Regel unter 10 Gew.-%, bezogen auf (C) gehalten wird, um unerwünschte Vernetzung zu vermeiden.

Bevorzugt werden solche Monomere verwendet, die keine funktionellen Gruppen enthalten. Dazu gehören Olefine mit 2 bis 20 C-Atomen, Vinylaromaten mit 8 bis 12 C-Atomen (Meth)acrylsäureester geradkettiger, verzweigter, cycloaliphatischer und araliphatischer Alkohole mit 1 bis 20 C-Atomen, Vinylester von Carbonsäuren mit 1 bis 20 C-Atomen, (Meth)acrylnitril, Vinyl- und Allylether mit 3 bzw. 4 bis 20 C-Atomen, Malein- oder Fumarsäurediester von Alkoholen mit 1 bis 20 C-Atomen.

Es kann sinnvoll sein, zusätzlich dazu funktionelle Gruppen enthaltende Monomere (C') zu verwenden, wobei deren Anteil, bezogen auf die Summe (A) + (B) + (C), in der Regel unter 10 Gew.-% bleiben soll. Zu diesen Monomeren gehören z.B. Hydroxylgruppen enthaltende Monomere wie Hydroxyethyl-, -propyl- oder -butyl (meth) acrylat, Allylalkohol oder Monoallylether mehrwertiger Alkohole, olefinisch ungesättigte Carbonsäuren mit 3 bis 6 C-Atomen wie (Meth) Acrylsäure, Maleinsäure, Fumarsäure, Crotonsäure sowie die Halbester der Dicarbonsäuren, Epoxyverbindungen wie Glycidyl-(meth)acrylat oder Glydicylallylether. Bevorzugt sind Stickstoff enthaltende funktionelle Monomere, wie (Meth) acrylamid und deren N-Alkylderivate, Vinylpyridin, N-Vinylpyrrolidon, N-Vinylcaprolactam, N-Vinylformamid, Dialkylaminoalkyl(meth)acrylate, -vinyl- oder -allylether, sowie N-(Meth-)Acryloyllactame.

Bevorzugt werden als Monomere (C) Vinylaromaten, insbesondere Styrol, Methylstyrol oder Vinyltoluol, sowie (Meth)acrylsäureester von 1 bis 8-C-Atomen enthaltenden Alkanolen, speziell Methyl-, Ethyl, n- und i-Butyl, 2-Ethylhexyl (meth)acrylat, ferner Vinylacetat und -propionat eingesetzt.

Der Anteil der Monomeren (C), bezogen auf die Summe asu (A), (B) und (C) kann in weiten Grenzen variieren. Zur Herstellung von Pfropfpolymerisaten P aus solchen Präpolymeren B, die allein keine hinreichende Reaktivität gegenüber den Polymeren A aufweisen, ist es notwendig, Vinylmonomere C ggf. mit C' mitzuverwenden. Bevorzugt werden mindestens 1 Gew.-% Monomere (C) eingesetzt. Die obere Grenze des Anteils der Monomeren (C) richtet sich im wesentlichen nach der Wahl der Anteile am Kautschuk (A) und Polymeren (B). Bevorzugt enthalten die Pfropfpolymerisate P bis zu 50 Gew.-% Monomere (C).

Das erfindungsgemässe Verfahren kann auch in Gegenwart von Copolymerisaten R durchgeführt werden. Diese werden hergestellt durch Copolymerisation von

A'. 5 bis 95 Gew.-Teilen kautschukartige Polymerisate mit einer Glastemperatur unter 0 °C bildenden Monomeren,

B'. 95 bis 5 Gew.-Teilen eines monoolefinische · Doppelbindungen enthaltenden Polyaddukts oder Polykondensats mit einem mittleren Gehalt an olefinischen Doppelbindungen je Polymermolekül von 0,2 bis 2 und einer Glastemperatur über 0 °C, sowie

C. 0 bis 90 Gew.-Teilen Vinylmonomeren.

Bevorzugte Monomere A' sind Dien- und Acrylat-Monomere, insbesondere Butadien und/oder Butylacrylat.

Die erfindungsgemäss eingesetzten Pfropfpolymerisate P bzw. Copolymerisate R können durch Polymerisation der Polymeren (B) bzw. (B') und ggf. der Monomeren (C) in Gegenwart des Kautschuks (A) bzw. der Monomeren (A') unter Zusatz von in Radikale zerfallende Verbindungen oder durch energiereiche Strahlung hergestellt werden. Die Polymerisation kann in Emulsionen, Suspensionen oder bevorzugt in Lösung bzw. in nichtwässriger Dispersion erfolgen. Bevorzugte Lösungsmittel sind Kohlenwasserstoffe, zum Beispiel Toluol, Xylole, Hexan, Cyclohexan oder Benzine mit Siedebereichen von 50 bis 200 °C. Besonders bevorzugt werden Lösungsmittel, in denen die Kautschuke (A) und die Polymeren (B) bzw. (B') mit nicht zu hohen Viskositäten löslich sind, mit Siedebereichen von 50 bis 150 °C. Eine weitere bevorzugte Ausführungsform besteht darin, die verwendeten Monomeren (C) als Lösungsmittel zu verwenden und ggf. den Überschuss an derartigen Lösungsmitteln durch Destillation zu entfernen.

Als Starter können die üblichen in Radikale zerfallenden Verbindungen eingesetzt werden, z.B. Azoverbindungen wie Azoisobutyronitril, Acylperoxide wie Benzoyl- oder Lauroylperoxid, Alkylperoxide wie t-Butylperoxid, Hydroperoxide wie Cumylhydroperoxid, Perester wie t-Butylperpivalat, -peroctoat, -permeodecanoat oder -perbenzoat bzw. die entsprechenden t-Amylester, Peracetate, Persulfate oder auch Wasserstoffperoxid. Ggf. kann der Zusatz von Verbindungen, die den Zerfall der Starter beschleunigen (Redoxsysteme), nützlich sein. Die Starter können einzeln oder im Gemisch verwendet werden, bevorzugt werden Gemische von Startern unterschiedlicher Halbwertszeit.

Die Pfropfpolymerisate P sind, falls keine Monomeren C ggf. mit C' verwendet werden, Anlagerungsprodukte der Polymeren B an Polymere A; bei Verwendung von Monomeren C ggf. mit C' dienen die Polymeren A und B als Pfropfgrundlage, aus den Monomeren C ggf. mit C' entstehen die Pfropfreiser. Die bevorzugten olefinisch ungesättigten Polymeren B' können auch als Seitenketten der Pfropfreiser einpolymerisiert werden.

Aufgabe der Erfindung war ferner die Entwicklung von Pfropfpolymerisaten, die sich beispielsweise zur Modifizierung von Polyamid-Formmassen eignen.

Besonders bevorzugte Pfropfpolymerisate P, die als solche neu sind, bestehen aus

A. 20 bis 89,9 Gew.-% eines kautschukartigen Dienpolymerisats mit einer Glastemperatur unter 0 °C und einem Molekulargewicht von 500 bis 5 000, insbesondere Polybutadienölen oder Polybutadienblöcke enthaltenden Blockcopolymerisaten,

B. 10 bis 50 Gew.-% eines Polyalkylenoxids, Polyesters, Polyamids oder Polyurethans mit einem Molekulargewicht von 1 000 bis 40 000 und einem mittleren Gehalt an olefinischen Doppelbindungen je Polymermolekül von 0,3 bis 1,5 und

C. 0,1 bis 40 Gew.-% beines Vinylmonomeren.

Eine weitere Gruppe bevorzugter neuer Pfropfpolymerisate P besteht aus

A. 20 bis 90 Gew.-% eines kautschukartigen Dienpolymerisats mit einer Glastemperatur unter 0 °C und einem Molekulargewicht von 500 bis 500 000, und

B. 10 bis 80 Gew.-% eines Polyalkylenoxids, Polyesters, Plyamids oder Polyurethans mit einem Molekulargewicht von 1 000 bis 40 000 und einem mittleren Gehalt an olefinischen Doppelbindungen je Polymermolekül von 0,3 bis 1,5.

Diese Pfropfpolymerisate werden hergestellt durch Umsetzung der Komponenten (A) und (B) bei Temperaturen von 150 bis 300 °C, wobei die Zugabe von radikalischen Startern und Lösungsmitteln nicht unbedingt notwendig ist. Die Herstellung kann auch durch Umsetzung der Komponente (A) mit $\alpha,\beta$-olefinisch ungesättigten Dicarbonsäuren bzw. deren Anhydriden, insbesondere Maleinsäureanhydrid und anschliessender Reaktion dieser maleinierten Polymeren (A) mit Polyetherolen, Polyesterolen, Polyurethanen oder Polyamidaminen erfolgen.

Die erfindungsgemässe aktivierte anionische Lactampolymerisation erfolgt gemäss dem allgemein bekannten Verfahren. Bevorzugtes Lactam ist $\varepsilon$-Caprolactam, darüber hinaus können auch Pyrrolidon, Capryllactam, Laurinlactam, Önanthlactam sowie die entsprechenden C-substituierten Lactame eingesetzt werden.

In der Regel verwendet man dabei die Pfropfpolymerisate P bzw. R in Anteilen von 1 bis 40 %, bevorzugt 5 bis 30 Gew.-%, bezogen auf den gesamten Ansatz.

Bei der aktivierten alkalischen Lactampolymerisation geht man von zwei Komponenten I und II aus. Komponente I stellt eine Lactam-Schmelze dar, die einen Katalysator enthält, Komponente II ist eine Lactam-Schmelze, die einen Aktivator enthält.

Geeignete Katalysatoren sind z.B. Alkali- und Erdalkaliverbindungen von Lactamen, wie Natrium-$\varepsilon$-caprolactamat, oder von kurzkettigen aliphatischen Carbonsäuren, wie Natrium- oder Kaliumformiat, oder von Alkoholen mit 1 bis 6 Kohlenstoffatomen, wie Natriummethylat oder Kalium-tert.-butylat. Ausserdem können auch Alkali- oder Erdalkalihydride, -hydroxyde oder-carbonate verwendet werden, sowie Grignard-Verbindungen. Die Katalysatoren werden üblicherweise in Mengen von 0,1 bis 10 Mo.-%, bezogen auf Gesamt-Lactam, eingesetzt.

Als Aktivatoren kommen in Frage: N-Acyllactame, wie N-Acetylcaprolactam, substituierte Triazine, Carbodiimide, Cyanamide, Mono- und Polyisocyanate, sowie maskierte Isocyanatverbindungen. Sie werden bevorzugt in Mengen von 0,1 bis 10 Mol-% eingesetzt.

Die Polymerisation des Lactams kann in Gegenwart üblicher Stabilisatoren durchgeführt werden. Besonders vorteilhaft ist eine Kombination von Cu I und K I im Molverhältnis 1:3, die in Mengen von 50 bis 100 ppm Kupfer, bezogen auf Gesamtlactam, der aktivatorhaltigen Komponente II zugesetzt wird. Weitere geeignete Stabilisatoren sind Kryptophenole und Amine.

Der aktivatorhaltigen Komponete B können ferner Keimbildner, wie Talkum oder Polyamid-2,2 in Mengen von bis zu 2 Gew.-%, gegebenenfalls zusammen mit Peroxiden, zugesetzt werden.

Weitere übliche Zusätze sind Regler, Pigmente, Farbstoffe, Weichmacher, Füllstoffe, Fasern, Flammschutzmittel und Treibmittel.

Der aktivatorhaltigen Komponente II können auch nicht vernetzte, präpolymere Isocyanate in Mengen von 1 bis 30 Gew.-%, bezogen auf Gesamt-Lactam, zugesetzt werden. Dabei sind z.B. solche Substanzen geeignet, die durch Kettenverlängerung von Isocyanaten mit Polyether/Polyesterolen hergestellt wurden. Sie weisen einen Isocyanatgehalt von 0,1 bis 10 Gew.-% auf. Sie können auch während der Polymerisation des Lactams mit der äquivalenten Menge Polyol umgesetzt werden, indem man der katalysatorhaltigen Lactam-Schmelze das Polyol und vorteilhafterweise einen urthanbildenden Katalysator zugibt.

Weiterhin können in Lactam lösliche Polymere, wie z.B. hochmolekulare Polyester, nicht vernetzte Polyurethane, Polytetrahydrofuran, sowie durch Polykondensation hergestellte Copolyamide in Mengen von 1 bis 30 Gew.-% zugesetzt werden.

Die Komponenten I und II werden bei Temperaturen zwischen 70 und 140 °C, vorzugsweise zwischen 100 und 135 °C, intensiv gemischt, in eine Form transportiert und dort bei Temperaturen zwischen 120 und 200 °C polymerisiert. Die dabei angewandte Verfahrensweise entspricht der Reaktionsspritzguss-Technik, die für Polyurethane z.B. von Piechota und Röhr in «Integralschaumstoff», Carl-Hanser-Verlag 1975, Seiten 34 bis 37 beschrieben ist.

Kleinere Platten und Formteile können mit Niederdruck-Dosieranlagen hergestellt werden, wobei die Befüllung in die offene Form erfolgt. Dabei empfiehlt es sich, kleinere Mischkammern mit teflonbeschichteten Oberflächen und ebensolchen Rührorganen zu verwenden.

Bevorzugt werden die erfindungsgemässen Formkörper jedoch mit einer Hochdruck-Dosieranlage hergestellt. Die Vermischung der Komponenten erfolgt hier in Art einer Gegenstromverdüsung.

Das dabei entstehende Halbzeug kann dann durch Verpressen, vorzugsweise oberhalb des Schmelzpunktes des Polyamids zum Fertigteil verarbeitet werden.

Die nach dem erfindungsgemässen Verfahren hergestellten Formkörper zeichnen sich durch ausgezeichnete Oberflächenqualität, gute mechanische Eigenschaften und kurze Formstandzeiten aus. Sie eignen sich insbesondere als Formteile für die Automobilindustrie, beispielsweise Karosserieteile, wie Kotflügel und Türen, oder für technische Gehäuseteile.

Die in den Beispielen genannten Teile und Prozente beziehen sich auf das Gewicht. Die K-Werte wurden nach Fikentscher, Cellulosechemie 13, S. 58 (1932) gemessen; die weiteren Ergebnisse werden gemäss den DIN-Normen erhalten.

Beispiele
Herstellung des Polymeren B1

500 Teile eines Polyethylenoxids aus 200 Mol Ethylenoxid je Mol Ethylenglycol, 5 Teile Maleinsäureanhydrid, 5,5 Teile Bernsteinsäureanhydrid und 100 Teile Toluol werden unter Rühren während 1 Stunde auf 110 °C erwärmt und eine weitere Stunde bei dieser Temperatur gerührt. Anschliessend entfernt man flüchtige Anteile durch Destillation im Vakuum und trägt das Produkt als Schmelze aus. Das Zahlenmittelmolekulargewicht beträgt 8 040.

Herstellung des Pfropfpolymerisats P1

In einem Kolben werden unter Rühren 25 Teile eines Polybutadienöls vom Molekulargewicht 3 000 (Komponente A), 8,3 Teile Styrol (Komponente C) und 0,05 Teile Irganox [R] 1 076 (Antioxidans der Fa. Ciba Geigy) während 1,5 Stunden auf 70 °C erwärmt, dazu werden 50 Teile frisch destilliertes flüssiges $\varepsilon$-Caprolactam als Lösungsmittel zugegeben und der Ansatz wird auf 85 °C erhitzt. Dann werden 12,5 Teile des Polymeren B1 und 0,4 Teile Acryloylcaprolactam als Komponente C' hinzugefügt, man erwärmt auf 90 °C, gibt 0,06 Teile einer 50%igen Lösung von tert. Butylperoctoat (als Polymerisationsinitiator) in Benzin während 5 Minuten zu und lässt weitere 4,5 Stunden bei 88 bis 90 °C rühren. Anschliessend gibt man je 0,016 Teile Hydrochinon und Hydrochinonmonomethylether als Stabilisatoren zu und destilliert flüchtige Anteile im Vakuum bei 100 bis 120 °C ab. Man erhält 3,7 Teile Destillat und 92,6 Teile einer Lösung des Pfropfpolymeren P1 ind Caprolactam mit Festgehalt 44,1% (1 Stunde 120 °C, 200 mbar).

Zur Strukturaufklärung wird das Produkt chromatographisch gereinigt und durch Pyrolyse-Gaschromatogramm als Polymerisat, bestehend aus Butadien-, Ethylenglycol-, Styrol- und Acryloylcaprolactam-Einheiten identifiziert.

Herstellung des Polymeren B2

Aus 2,8 Teilen Allylalkohol sowie je 200 Teilen Propylenoxid und Ethylenoxid wird unter Verwendung von 0,1% KOH als Katalysator ein Polyether mit OH-Zahl 19 und Zahlenmittelmolekulargewicht 3 800 (dampfdruckosmometrisch) hergestellt.

Herstellung des Pfropfpolymerisats P2

4 Teile eines Polybutadienkautschuks vom Molekulargewicht 300 000 werden in 20 Teilen Toluol und 20 Teilen Styrol bei Raumtemperatur gelöst. Man gibt 0,06 Teile Irganox 1 076 zu und erwärmt während 1,5 Stunden auf 80 °C. Nach weiteren 2 Stunden Rühren bei 80 °C werden 2 Teile des Polymeren B2, nach weiteren 30 Minuten 0,015 Teile Acryloylcaprolactam und 0,025 Teile einer 50%igen Lösung von t-Butylperoctoat in Benzin zugegeben, man erwärmt auf 87 bis 90 °C und rührt 1,8 Stunden bei dieser Temperatur. Danach fügt man 0,01 Teile tert.Butyl-p-kresol und 12 Teile frisch destilliertes flüssiges ε-Caprolactam zu. Anschliessend werden bei 100 bis 120 °C flüchtige Anteile bis zu einem Restdruck von 50 mbar destilliert. Man erhält 36,5 Teile Destillat und 21,6 Teile einer Lösung des Pfropfpolymerisats P2 mit Festgehalt 45,1%.

Herstellung des Pfropfpolymerisats P3

7,2 Teile eines Acrylnitril-Butadien-Acrylnitril-Blockpolymerisats mit 80 Gew.-% Butadien, das sekundäre Aminogruppen enthält und ein Molekulargewicht von 2 200 hat, 2,4 Teile Polymer B1, 12 Teile frisch destilliertes ε-Caprolactam, 0,014 Teile Irganox 1 076, 2,2 Teile Styrol und 0,2 Teile Methacryloylcaprolactam werden während 2 Stunden auf 80 °C erwärmt, man gibt unter Rühren 0,015 Teile einer 50%igen Lösung von tert. Butylperpivalat in aliphatischen Kohlenwasserstoffen zu, erhitzt auf 88 bis 92 °C und rührt 4,5 Stunden bei dieser Temperatur. Die Aufarbeitung erfolgt, wie bei der Herstellung des Kautschuk-Pfropfpolymerisats 1 beschrieben. Man erhält 2,1 Teile Destillat und 21,9 Teile einer Lösung des Pfropfpolymeren P3 mit Festgehalt 46,2%.

Herstellung des Pfropfpolymerisats P4

81 Teile des für das Pfropfpolymerisat P3 eingesetzten Acrylnitril-Blockpolymerisats und 27 Teile des Polymeren B2 werden unter Stickstoff auf 225 °C erwärmt und weitere 4 Stunden bei dieser Temperatur gerührt. Man lässt abkühlen und trägt das Produkt als Schmelze aus.

Das Produkt weist ein Zahlenmittelmolekulargewicht (dampfdruckosmometrisch) von 11 500 auf, die Elementaranalyse von durch Umfällen aus kaltem Methanol erhaltenem Produkt ergab 77,2% C, 10,3% H und 12,5% O.

Herstellung von Polyamid-Formkörpern

Beispiel 1

Zusammensetzung der Komponente I:
136,36 Teile Pfropfpolymerisat P1
63,64 Teile ε-Caprolactam,
40,0 Teile einer 15%igen Lösung von Hexamethylendiisocyanat in Caprolactam
Zusammensetzung der Komponente II:
200 Teile Caprolactam
28 Teile einer 17,5%igen Lösung von Natriumlactamat in Caprolactam.

Versuchsdurchführung:

Die Komponenten I und II wurden in einer Giessmaschine (Niederdruckmaschine) der F-Reihe (Fa. Elastogran Maschinenbau, Strasslach bei München) in einem Mischkopf (Mischtemperatur 125 bis 135 °C) mit einem Aluminium-Schneckenrührer mit 8 000 U/Minute gemischt. Die Ausstossmenge bei einem Mischungsverhältnis von 1:1 betrug 19,5 g pro Sekunde. Die Mischung wurde in eine offene, auf 150 °C beheizte Form gegossen. Die Entformzeit betrug 1,5 min.

Produkteigenschaften:
Lochkerbschlagzähigkeit (DIN 53 453) in kJ · $m^{-2}$:
bei 23 °C:  nicht gebrochen
bei −20 °C:  19
Reissdehnung (DIN 53 455):  137%
Shore D-Härte (DIN 53 504):  66

Beispiel 2

Zusammensetzung der Komponente I:
136,36 Teile Pfropfpolymerisat P2
63,64 Teile Caprolactam
40 Teile einer 15%igen Lösung von Hexamethylendiisocyanat in Caprolactam
Zusammensetzung der Komponente II:
200 Teile Caprolactam,
28 Teile einer 17,5%igen Lösung von Natriumlactamat in Caprolactam.
Versuchsdurchführung wie in Beispiel 1
Produkteigenschaften:
Lochkerbschlagzähigkeit bei 23 °C:  87 kJ · $m^{-2}$
bei −20 °C:  12 kJ · $m^{-2}$
Reissdehnung: 30%
Shore D-Härte:70

Beispiel 3

Zusammensetzung der Komponente I:

130,43 Teile Pfropfpolymerisat P3
62,57 Teile Caprolactam
50 Teile einer 15%igen Lösung von Hexamethylendiisocyanat in Caprolactam
Zusammensetzung der Komponente II:
207 Teile Caprolactam
36 Teile einer 17,5%igen Lösung von Natriumlactamat in Caprolactam.
Versuchsdurchführung wie in Beispiel 1
Produkteigenschaften:
Lochkerbschlagzähigkeit 23 °C: nicht gebrochen
−20 °C: 30,7 kJ · m$^{-2}$
Reissdehnung: 107%
Shore D-Härte: 75

**Beispiel 4**
Zusammensetzung der Komponente I:
60 Teile Pfropfpolymerisat P4
140 Teile Caprolactam
40 Teile einer 15%igen Lösung von Hexamethylendiisocyanat in Caprolactam
Komponente II:
200 Teile Caprolactam
28 Teile einer 17,5%igen Lösung von Natriumlactamat in Caprolactam
Versuchsdurchführung wie in Beispiel 1
Produkteigenschaften:
Lochkerbschlagzähigkeit 23 °C: nicht gebrochen
−20 °C: 31 kJ · m$^{-2}$
Reissdehnung: 100%
Shore D-Härte: 71

**Patentansprüche**
1. Verfahren zur Herstellung von schlagzähen Polyamid-Formmassen durch aktivierte alkalische Polymerisation von Lactamen, dadurch gekennzeichnet, dass man die Polymerisation durchführt in Gegenwart eines Pfropfpolymerisats P, bei welchem auf
A. 5 bis 95 Gew.-Teilen eines kautschukartigen Polymerisats mit einem Molekulargewicht von 500 bis 500 000 und einer Glastemperatur unter 0 °C
B. 95 bis 5 Gew.-Teile eines Polyaddukts, eines Polykondensats oder eines Acrylpolymerisats, welches eine Glastemperatur über 0 °C aufweist, sowie
C. 0 bis 90 Gew.-Teilen Vinylmonomere gepfropft sind.
2. Verfahren zur Herstellung von schlagzähen Polyamid-Formmassen durch aktivierte alkalische Polymerisation von Lactamen, dadurch gekennzeichnet, dass man die Polymerisation durchführt in Gegenwart eines Copolymerisats R, hergestellt durch Copolymerisation von
A'. 5 bis 95 Gew.-Teilen kautschukartiger Polymerisate mit einem Molekulargewicht von 500 bis 500 000 und einer Glastemperatur unter 0 °C bildenden Monomeren,
B'. 95 bis 5 Gew.-Teilen eines monoolefinische Doppelbindungen enthaltenden Polyaddukts oder Polykondensats mit einem mittleren Gehalt an olefinischen Doppelbindungen je Polymermolekül von 0,2 bis 2 und einer Glastemperatur über 0 °C, sowie

C. 0 bis 90 Gew.-Teilen Vinylmonomeren.
3. Verfahren nach Anspruch 1, dadurch gekennzeichnet, dass die Polymerisate A Dienpolymerisate mit einem Molekulargewicht zwischen 500 und 500 000 sind.
4. Verfahren nach Anspruch 1, dadurch gekennzeichnet, dass die Polymerisate A Polybutadienöle mit einem Molekulargewicht zwischen 500 und 5 000 sind.
5. Verfahren nach Anspruch 1, dadurch gekennzeichnet, dass die Polymerisate A reaktive Gruppen mit aciden Wasserstoffatomen tragen.
6. Verfahren nach Anspruch 2, dadurch gekennzeichnet, dass die Monomeren A' Dien- oder Acrylat-Monomere, vorzugsweise Butadien und/oder Butylacrylat sind.
7. Verfahren nach Anspruch 1, dadurch gekennzeichnet, dass die Polymeren B einen mittleren Gehalt an olefinischen Doppelbindungen je Polymermolekül von 0,2 bis 2,0 aufweisen.
8. Verfahren nach Anspruch 1 oder 2, dadurch gekennzeichnet, dass die Polymeren B bzw. B' in monomerem Lactam löslich und mit Polylactam verträglich sind.
9. Verfahren nach Anspruch 1 oder 2, dadurch gekennzeichnet, dass die Polymeren B bzw. B' Polyether, Polyester, Polyamide oder Polyurethane mit einem Molekulargewicht zwischen 1 000 und 50 000 sind.

10. Verfahren nach Anspruch 1 oder 2, dadurch gekennzeichnet, dass das Vinylmonomere C Styrol ist.
11. Verfahren nach Anspruch 1 oder 2, dadurch gekennzeichnet, dass ein funktionelle Gruppen tragendes Vinylmonomeres C' in Mengen von unter 10 Gew.-%, bezogen auf die Summe A+B+C, zugesetzt wird.
12. Verfahren nach Anspruch 1 oder 2, dadurch gekennzeichnet, dass bei der alkalischen Lactampolymerisation eine Komponente (I), die Lactam und einen Katalysator enthält, und eine Komponente (II), die Lactam und einen Aktivator enthält, bei 70 bis 140 °C intensiv gemischt, in eine Form transportiert und dort bei 120 bis 200 °C polymerisiert werden.
13. Verfahren nach Anspruch 12, dadurch gekennzeichnet, dass die Polymerisation nach der Reaktionsspritzgusstechnologie durchgeführt wird.
14. Verfahren nach Anspruch 12, dadurch gekennzeichnet, dass der Aktivator enthaltenden Komponente (II) als Stabilisatoren Kryptophenole, Amine, oder ein Gemisch von Cu I und K I im Molverhältnis 1:3 zugesetzt wird.
15. Pfropfpolymerisate aus
A. 20 bis 89,9 Gew.-% eines kautschukartigen Dienpolymerisats mit einer Glastemperatur unter 0 °C und einem Molekulargewicht von 500 bis 5 000,
B. 10 bis 50 Gew.-% eines Polyalkylenoxids, Polyesters, Polyamids oder Polyurethans mit einem Molekulargewicht von 1 000 bis 40 000 und einem mittleren Gehalt an olefinischen Doppelbindungen je Polymermolekül von 0,3 bis 1,5 und

C. 0,1 bis 40 Gew.-% Einheiten eines Vinylmonomeren.

16. Pfropfpolymerisate aus

A. 20 bis 90 Gew.-% eines kautschukartigen Dienpolymerisats mit einer Glastemperatur unter 0 °C und einem Molekulargewicht von 500 bis 500 000, und

B. 10 bis 80 Gew.-% eines Polyalkylenoxids, Polyesters, Polyamids oder Polyurethans mit einem Molekulargewicht von 1 000 bis 40 000 und einem mittleren Gehalt an olefinischen Doppelbindungen je Polymermolekül von 0,3 bis 1,5.

## Revendications

1. Procédé de préparation de matière à mouler en polyamide, résistantes aux chocs, par polymérisation alcaline activée de lactames, caractérisé par le fait que l'on effectue la polymérisation en présence d'un polymérisat par greffe P, pour lequel sur

A. 5 à 95 parties en poids d'un polymérisat caoutchouteux d'un poids moléculaire de 500 à 500 000 et d'une température de transition vitreuse inférieure à 0 °C, sont greffées

B. 95 à 5 parties en poids d'un produit de polyaddition, d'un polycondensat ou d'un polymérisat acrylique qui possède une température de transition vitreuse supérieure à 0 °C, ainsi que

C. 0 à 90 parties en poids d'un monomère vinylique.

2. Procédé de préparation de matières à mouler en polyamide, résistantes aux chocs, par polymérisation alcaline activée de lactames, caractérisé par le fait que l'on effectue la polymérisation en présence d'un copolymérisat R préparé par copolymérisation de

A'. 5 à 95 parties en poids de monomères formant des polymérisats caoutchouteux d'un poids moléculaire de 500 à 500 000 et d'une température de transition vitreuse inférieure à 0 °C,

B'. 95 à 5 parties en poids d'un produit de polyaddition ou polycondensat contenant des doubles liaisons monooléfiniques, d'une teneur moyenne en doubles liaisons oléfiniques, par molécule de polymère, de 0,2 à 2 et d'une température de transition vitreuse supérieure à 0 °C, ainsi que

C. 0 à 90 parties en poids de monomères vinyliques

3. Procédé selon la revendication 1, caractérisé par le fait que les polymérisats A sont des polymérisats diéniques d'un poids moléculaire compris entre 500 et 500 000.

4. Procédé selon la revendication 1, caractérisé par le fait que les polymérisats A sont des huiles de polybutadiène d'un poids moléculaire compris entre 500 et 5 000.

5. Procédé selon la revendication 1, caractérisé par le fait que les polymérisats A portent des groupes réactifs à atomes d'hydrogène acides.

6. Procédé selon la revendication 2, caractérisé par le fait que les monomères A' sont des monomères diéniques ou acryliques, de préférence butadiène et/ou acrylate de butyle.

7. Procédé selon la revendication 1, caractérisé par le fait que les polymères B' possèdent une teneur moyenne en doubles liaisons oléfiniques de 0,2 à 2,0 par molécule de polymère.

8. Procédé selon la revendication 1 ou 2, caractérisé par le fait que les polymères B ou B' sont solubles dans du lactame monomère et compatibles avec du polylactame.

9. Procédé selon la revendication 1 ou 2, caractérisé par le fait que les polymères B ou B' sont des polyéthers, polyesters, polyamides ou polyuréthanes d'un poids moléculaire compris entre 1 000 et 50 000.

10. Procédé selon la revendication 1 ou 2, caractérisé par le fait que le monomère vinylique C est le styrène.

11. Procédé selon la revendication 1 ou 2, caractérisé par le fait qu'on ajoute un monomère vinylique C' portant des groupes fonctionnels, en proportion inférieure à 10% en poids, rapportée à la somme A+B+C.

12. Procédé selon la revendication 1 ou 2, caractérisé par le fait que, pour la polymérisation alcaline du lactame, on mélange de façon intense, entre 70° et 140 °C un composant (I) qui contient du lactame et un catalyseur, et un composant (II) qui contient du lactame et un activateur, on le transporte dans un moule et on l'y polymérise entre 120 et 200 °C.

13. Procédé selon la revendication 12, caractérisé par le fait que la polymérisation est effectuée selon la technique de l'injection-réaction.

14. Procédé selon la revendication 12, caractérisé par le fait qu'au composant (II) contenant un activateur, on ajoute, comme stabilisants des cryptophénols, amines ou un mélange de Cu I et K I en proportion molaire de 1:3.

15. Polymérisats par greffe de

A. 20 à 89,9% en poids d'un polymérisat diénique d'une température de transition vitreuse inférieure à 0 °C et d'un poids moléculaire de 500 à 5 000

B. 10 à 50% en poids d'un polyoxyde d'alkylène, d'un polyester, d'un polyamide ou d'un polyuréthanne d'un poids moléculaire de 1 000 à 40 000 et d'une teneur moyenne en doubles liaisons de 0,3 à 1,5, par molécule de polymère, et

C. 0,1 à 40% en poids de motifs d'un monomère vinylique.

16. Polymérisats par greffe de

A. 20 à 90% en poids d'un polymérisat diénique caoutchouteux, d'une température de transition vitreuse inférieure à 0 °C et d'un poids moléculaire de 500 à 500 000 et

B. 10 à 80% en poids d'un poly(oxyde d'alkylène), d'un polyester, d'un polyamide ou d'un polyuréthanne d'un poids moléculaire de 1 000 à 40 000 et d'une teneur moyenne en doubles liaisons de 0,3 à 1,5, par molécule de polymère.

## Claims

1. A process for the preparation of an impact-resistant nylon molding material by activated alkaline polymerization of lactams, wherein the polymerization is carried out in the presence of a graft polymer P, in which

A. from 5 to 95 parts by weight of a rubber-like polymer having a molecular weight of from 500 to 500 000 and a glass transition temperature below 0 °C form the grafting base for

B. from 95 to 5 parts by weight of a polyadduct, polycondensate or acrylyl polymer which has a glass transition temperature above 0 °C, and

C. from 0 to 90 parts by weight of vinyl monomers.

2. A process for the preparation of an impact-resistant nylon molding material by activated alkaline polymerization of lactams, wherein the polymerization is carried out in the presence of a copolymer R prepared by copolymerization of

A'. from 5 to 95 parts by weight of monomers which form rubber-like polymers having a molecular weight of from 500 to 500 000 and a glass transition temperature below 0 °C,

B'. from 95 to 5 parts by weight of a polyadduct or polycondensate which contains monoolefinic double bonds, from 0.2 to 2 olefinic double bonds being present on average per polymer molecule, and has a glass transition temperature above 0 °C, and

C. from 0 to 90 parts by weight of vinyl monomers.

3. A process as claimed in claim 1, wherein the polymer A is a diene polymer having a molecular weight of from 500 to 500 000.

4. A process as claimed in claim 1, wherein the polymer A is a polybutadiene oil having a molecular weight of from 500 to 5 000.

5. A process as claimed in claim 1, wherein the polymer A carries reactive groups having acidic hydrogen atoms.

6. A process as claimed in claim 2, wherein the monomers A' are diene or acrylate monomers, preferably butadiene and/or butyl acrylate.

7. A process as claimed in claim 1, wherein the polymer B contains on average from 0.2 to 2.0 olefinic double bonds per polymer molecule.

8. A process as claimed in claim 1, wherein the polymer B or B' is soluble in monomeric lactam and is compatible with polylactam.

9. A process as claimed in claim 1 or 2, wherein the polymer B or B' is a polyether, polyester, nylon or polyurethane having a molecular weight of from 1 000 to 50 000.

10. A process as claimed in claim 1, wherein the vinyl monomer C is styrene.

11. A process as claimed in claim 1, wherein a vinyl monomer C' carrying functional groups is added in an amount of less than 10% by weight, based on the sum of A, B and C.

12. A process as claimed in claim 1 or 2, wherein, in the alkaline lactam polymerization, a component (I), which contains a lactam and a catalyst, and a component (II), which contains a lactam and an activator, are mixed intensively at from 70 to 140 °C, transported into a mold and polymerized therein at from 120 to 200 °C.

13. A process as claimed in claim 12, wherein the polymerization is carried out by the reactive injection molding technique.

14. A process as claimed in claim 12, wherein a kryptophenol, an amine, or a mixture of Cu I and K I in a molar ratio of 1:3, is added, as stabilizer, to the activator-containing component (II).

15. A graft polymer consisting of

A. from 20 to 89,9% by weight of a rubber-like diene polymer having a glass transition temperature below 0 °C and a molecular weight of from 500 to 5 000,

B. from 10 to 50% by weight of a polyalkylene oxide, polyester, nylon or polyurethane having a molecular weight of from 1 000 to 40 000 and containing on average from 0.3 to 1.5 olefinic double bonds per polymer molecule, and

C. from 0.1 to 40% by weight of units of a vinyl monomer.

16. A graft polymer consisting of

A. from 20 to 90% by weight a rubber-like diene polymer having a glass transition temperature below 0 °C and a molecular weight of from 500 to 500 000, and

B. from 10 to 80% by weight of a polyalkylene oxide, polyester, nylon or polyurethane having a molecular weight of from 1 000 to 40 000 and containing on average from 0.3 to 1.5 olefinic double bonds per polymer molecule.